# EUROPEAN PATENT APPLICATION

(11) **EP 4 203 212 A1**
(43) Date of publication of application: **28.06.2023**
(21) Application number: 21217856.0
(22) Date of filing: 27.12.2021
(51) Int. Cl.: H02B 13/035

(54) **SWITCHGEAR DEVICE AND METHOD OF ASSEMBLING THEREOF**

(71) Applicant: Siemens Aktiengesellschaft, 80333 München (DE)
(72) Inventor: CHIKHALE, Ravindra, 403602 GOA (IN); SHINDE, Deepak, 422101 Nashik (IN); SONAWANE, Mahesh, 410210 Navimumbai (IN)
(74) Representative: Patentanwaltskanzlei WILHELM & BECK

(57) **Abstract**

A switchgear device (100, 400, 500, 600) is described, comprising a circuit-breaker housing (112) having a conductor rod (118). The switchgear device further comprises a first connecting member (402, 502, 602) having a hollow cylindrical section (404, 504, 604) and a first flange (406, 506, 606). Herein, the first flange (406, 506, 606) of the first connecting member (402, 502, 602) is mounted to the first end (112a) of the circuit-breaker housing (112). The switchgear device (100, 400, 500, 600) also comprises a second connecting member (412, 512, 612) having a hollow cylindrical section (414, 514, 614). Herein, the second connecting member (412, 512, 612) is mounted at or proximal to a second end (404b, 504b, 604b) of the first connecting member (402, 502, 602), such that the conductor rod (118) is received in and extends through the hollow cylindrical section (414, 514, 614) of the second connecting member (412, 512, 612). The switchgear device (100, 400, 500, 600) further comprises a cable housing (116) supported from a first end (116a) thereof onto the second connecting member (412, 512, 612), such that the conductor rod (118) is received in the cable housing (116).

## Description

### DESCRIPTION

The present disclosure generally relates to electric power distribution, and more particularly to a clean-air medium-voltage switchgear device for opening and closing a circuit in electric power distribution.

A switchgear device (also commonly known as switching device or simply switchgear) is an apparatus used for controlling, regulating, and switching on and off the electrical circuit in electrical power distribution. The switchgear device is typically placed in both high and low voltage sides of a power transformer, and is used for de-energizing the equipment for testing and maintenance and for clearing the fault. For instance, when the fault occurs in the electrical power distribution, heavy current flow through equipment due to which there is a risk that the equipment may get damaged, and the service may also get interrupted. Therefore, in order to protect the lines, generators, transformers and other electrical equipment from damage, automatic protective devices, such as the switchgear devices, are utilized.

The switchgear device needs to provide a high dielectric strength to withstand high voltages. In the case of switchgear device, and even other devices such as transformer (s), power line (s) (especially high-voltage electrical power transmission line (s)), busbar (s), circuit breaker, switch disconnector, earthing switch, (Switching) contactor (s), waveguides, etc., and where large electrical voltages (from about 1 kV and greater) and / or strong electric fields may occur, typically a gas or gas mixture for electrical insulation of the electrical active (i.e. exposed to electrical or a strong electric field exposed) parts is used. Gas insulation offers significantly improved dielectric strength compared to atmospheric air. In the switchgear device, the electrical contacts are sealed inside a tank with pressurized insulating gas.

The gas most commonly used as a switchgear insulating medium is Sulfur Hexafluoride (SF6). SF6 offers very good insulating properties (dielectric strength about 2.7 times better than air) as well as very good extinguishing properties (no conductive decomposition products). In addition, SF6 encapsulated systems provide a very high level of reliability, personal protection (SF6 is chemically very stable) and lifetime (up to 30 years) and require only a very low level of maintenance. As SF6 gas has very good dielectric properties, it is possible to keep the clearance much closer within suitable dielectric rating of the switchgear. However, SF6 has a relatively high global warming potential (GWP) considered with respect to CO2. Due to its high global warming potential SF6 was included in the list of gases whose entry into the atmosphere is to be limited, according to the Kyoto Protocol of 1997. As per EU guidelines for clean air switchgear, some manufacturers have started to build a portfolio in medium voltage switchgear to shift from SF6 gas insulated switchgear to clean air solution.

A particular type of switchgear device is a vacuum circuit interrupter apparatus which includes separable main contacts disposed in an insulated housing. Herein, the switchgear, typically, includes a bus-bar housing, a circuit-breaker housing, a transformer housing and a cable housing which together forms a single-phase pole assembly. Such similar pole assemblies mounted together in adjacent layer will form the entire switchgear device. There is usually a conductor rod which runs from the circuit-breaker housing to the cable housing, via the transformer housing. Further, the switchgear device may have a current transformer provided in the transformer housing, disposed in connection with the cable housing, which can be used for protection and measuring devices. In the typical design for the switchgear device, the current transformer is positioned coaxially around the conductor rod.

Usually, there is a gas connection between the circuit-breaker housing and cable housing, with the conductor rod placed inside a connecting member in the form of a pipe, and which is usually made of Aluminum. Further, the connection between the cable housing and the conductor rod is made by using screws. In traditional switchgear insulating medium with SF6 being the switchgear insulating medium, the dielectric clearance between the conductor rod and Aluminum connecting member (pipe) is usually sufficient due to the high dielectric strength of SF6 gas. With these dielectric clearances, the connecting member and the current transformer can be assembled for getting the required performance of the current transformer.

However, for discussed clean air gas or the like, the dielectric clearances for the conventional design may not be sufficient; especially with the conventional design using screws for connection between the cable housing and the conductor rod; as those regions containing and surrounding the screws may be highly susceptible to dielectric breakdown from the conductor rod. This is because, as there is change in insulating medium, the dielectric properties also change accordingly. In general, such clean air insulating gases have lower dielectric strength than conventionally used SF6 based insulating gas, and thus may not be suitable to be directly implemented with, specifically, the discussed conventional design for connection between the cable housing and the conductor rod. Therefore, as switchgears shift from SF6 insulating gas to clean air insulating gas, the risk of dielectric failure (as discussed above) is compounded.

One possible solution to overcome this challenge would be to increase dielectric clearances, for instance, by increasing diameter of the said connecting member to increase distance from the conductor rod arranged therein. However, with such change, it may not be possible to use an existing current transformer. This is because with increase in dimensions for the said connecting member for increasing dielectric clearance, the dimensions of the current transformer would also need to be increased, as the current transformer is co-axially arranged therewith, which in turn may increase overall cost of the switchgear device implementing such solution.

Hence, there is a need to develop new mechanism for switchgear device which can safely work within the limitations of dielectric strength of new type of insulating gases being employed without need to modify the existing major components, such as the current transformer and the like.

One object of the present disclosure is to provide a switchgear device for electric power distribution which can work with clean air insulating medium, such as SF6 free gases, like mixture of carbon dioxide gas and nitrogen gas.

The object of the present disclosure is achieved by a switchgear device as described herein. The switchgear device comprises a circuit-breaker housing having a conductor rod extending from a first end thereof. The switchgear device further comprises a first connecting member having a hollow cylindrical section and a first flange projecting outwardly in a radial direction from a first end of the hollow cylindrical section. Herein, the first flange of the first connecting member is mounted to the first end of the circuit-breaker housing, with a first portion of the conductor rod received in the hollow cylindrical section of the first connecting member. The switchgear device also comprises a second connecting member having a hollow cylindrical section. Herein, the second connecting member is mounted at or proximal to a second end of the first connecting member, such that a second portion of the conductor rod is received in and extends through the hollow cylindrical section of the second connecting member. The switchgear device further comprises a cable housing supported from a first end thereof onto the second connecting member, such that the second portion of the conductor rod is received in the cable housing.

In a first embodiment, the second connecting member has a second flange projecting outwardly in a radial direction from a first end of the hollow cylindrical section thereof, with the second flange having a set of first insert apertures formed therein. Herein, the cable housing is coupled to the second flange of the second connecting member using a set of first bolts passing through a set of apertures in the cable housing at the first end thereof and the set of first insert apertures.

In the first embodiment, each of the first insert apertures comprises a conducting insert disposed in electrical contact with the respective first bolt passing therethrough, to dielectrically stabilize at least a shaft portion of the said first bolt from the conductor rod.

In the first embodiment, each of the first insert apertures further comprises an electrode insert embedded in the second flange of the second connecting member and disposed in electrical contact with the conducting insert, to dielectrically stabilize at least a head portion of the respective first bolt passing therethrough from the conductor rod.

In the first embodiment, the first connecting member has a set of second insert apertures formed at the second end of the hollow cylindrical section thereof. Herein, the second connecting member has a third flange projecting inwardly in a radial direction from a second end of the hollow cylindrical section thereof, with the third flange having a set of third insert apertures formed therein. Further, herein, the second connecting member is coupled to the first connecting member using a set of second bolts passing through the respective set of third insert apertures and the second insert apertures therein.

In the first embodiment, the switchgear device further comprises a conducting member arranged with the third flange of the second connecting member, to dispose the set of second bolts in an electrical contact with the conductor rod.

In a second embodiment, the first connecting member has external threads defined along an outer side of the hollow cylindrical section, proximal to the second end thereof. Herein, the second connecting member has internal threads, complementary to the external threads in the first connecting member, defined along an inner side of the hollow cylindrical section thereof. Further, herein, the external threads in the first connecting member are engaged with the complementary internal threads in the second connecting member to mount the second connecting member to the first connecting member.

In a third embodiment, the first connecting member comprises an annular insert with external threads embedded therein such that the external threads of the annular insert are exposed. Herein, the second connecting member is in the form of an annular nut with internal threads. Further, herein, the external threads of the annular insert in the first connecting member are engaged with the complementary internal threads in the second connecting member to mount the second connecting member to the first connecting member.

In the third embodiment, the second connecting member has a thickness in a radial direction thereof to define a rim therefor, and wherein the cable housing is supported onto the rim of the second connecting member.

In the third embodiment, the switchgear device further comprises a conducting mesh embedded in the first connecting member and electrically disposed at earth potential, wherein the annular insert in the first connecting member is disposed in an electrical contact with the conducting mesh therein.

In one or more embodiments, the first connecting member and the second connecting member are made of one or more resin materials.

The object of the present disclosure is further achieved by a method of assembling a switchgear device. The method comprises providing a first connecting member having a hollow cylindrical section, and a first flange projecting outwardly in a radial direction from a first end of the hollow cylindrical section thereof. The method further comprises mounting the first flange of the first connecting member to a first end of a circuit-breaker housing of the switchgear device, with a first portion of a conductor rod, extending from the first end of circuit-breaker housing, being received in the hollow cylindrical section of the first connecting member. The method also comprises providing a second connecting member having a hollow cylindrical section. The method further comprises mounting the second connecting member at or proximal to a second end of the first connecting member, such that a second portion of the conductor rod is received in and extends through the hollow cylindrical section of the second connecting member. The method further comprises supporting a cable housing from a first end thereof onto the second connecting member, such that the second portion of the conductor rod is received in the cable housing.

In the first embodiment, the method comprises providing the first connecting member with a set of second insert apertures in the hollow cylindrical section at the second end thereof; providing the second connecting member having a second flange projecting outwardly in a radial direction from a first end of the hollow cylindrical section thereof, with the second flange having a set of first insert apertures formed therein, and a third flange projecting inwardly in the radial direction from a second end of the hollow cylindrical section thereof, with the third flange having a set of third insert apertures formed therein; coupling the cable housing to the second flange of the second connecting member using a set of first bolts passing through a set of apertures in the cable housing at the first end thereof and the set of first insert apertures to form a first sub-assembly; sliding the first sub-assembly along the second portion of the conductor rod; coupling the second connecting member to the first connecting member using a set of second bolts passing through the respective set of third insert apertures and the second insert apertures therein; and arranging a conducting member with the third flange of the second connecting member, disposing the set of second bolts in electrical contact with the conductor rod.

In the second embodiment, the method comprises providing the first connecting member with external threads defined along an outer side of the hollow cylindrical section, proximal to the second end thereof; providing the second connecting member with internal threads, complementary to the external threads in the first connecting member, defined along an inner side of the hollow cylindrical section thereof; sliding the cable housing along the second portion of the conductor rod; sliding the second connecting member along the second portion of the conductor rod, such that a first end of the cable housing is disposed between the first connecting member and the second connecting member; and engaging the external threads in the first connecting member with the complementary internal threads in the second connecting member to mount the second connecting member to the first connecting member, and thereby supporting the cable housing onto the second connecting member.

In the third embodiment, the method comprises providing the first connecting member having an annular insert with external threads embedded therein such that the external threads of the annular insert are exposed; providing the second connecting member in the form of an annular nut with internal threads and having a thickness in the radial direction thereof to define a rim therefor; sliding the cable housing along the second portion of the conductor rod; sliding the second connecting member along the second portion of the conductor rod, such that the first end of the cable housing is disposed between the first connecting member and the second connecting member; and engaging the external threads of the annular insert in the first connecting member with the complementary internal threads in the second connecting member to mount the second connecting member to the first connecting member, and thereby supporting the cable housing onto the rim of the second connecting member.

Other aspects, features, and advantages of the present disclosure are readily apparent from the following detailed description, simply by illustrating a number of particular embodiments and implementations, including the best mode contemplated for carrying out the present disclosure. The present disclosure is also capable of other and different embodiments, and its several details can be modified in various obvious respects, all without departing from the scope of the present disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a diagrammatic perspective view representation of a switchgear device, in accordance with one or more embodiments of the present disclosure;
- FIG 2A: is a diagrammatic perspective view representation of a pole assembly of the switchgear device, in accordance with one or more embodiments of the present disclosure;
- FIG 2B: is a diagrammatic perspective view representation of a cable housing of the switchgear device, in accordance with one or more embodiments of the present disclosure;
- FIG 2C: is a diagrammatic perspective view representation of a transformer housing of the switchgear device, in accordance with one or more embodiments of the present disclosure;
- FIG 3A: is a diagrammatic partial section view representation of a switchgear device, in accordance with prior-art;
- FIG 3B: is a diagrammatic perspective view representation of a connecting member for the switchgear device of FIG 3A, in accordance with prior-art;
- FIG 4A: is a diagrammatic partial section view representation of a switchgear device, in accordance with a first embodiment of the present disclosure;
- FIG 4B: is a diagrammatic perspective view representation of a first connecting member for the switchgear device, in accordance with the first embodiment of the present disclosure;
- FIG 4C: is a diagrammatic perspective view representation of a second connecting member for the switchgear device, in accordance with the first embodiment of the present disclosure;
- FIG 4D: is a diagrammatic perspective view representation of a conducting member for the switchgear device, in accordance with the first embodiment of the present disclosure;
- FIG 4E: is a diagrammatic enlarged view representation of a portion of the switchgear device showing connection between the first connecting member and the second connecting member therein, in accordance with the first embodiment of the present disclosure;
- FIGS 4F-4I: are diagrammatic view representations of stages involved in assembly of the switchgear device, in accordance with the first embodiment of the present disclosure;
- FIG 5A: is a diagrammatic partial section view representation of a switchgear device, in accordance with a second embodiment of the present disclosure;
- FIG 5B: is a diagrammatic perspective view representation of a first connecting member for the switchgear device, in accordance with the second embodiment of the present disclosure;
- FIG 5C: is a diagrammatic perspective view representation of a second connecting member for the switchgear device, in accordance with the second embodiment of the present disclosure;
- FIG 5D: is a diagrammatic enlarged view representation of a portion of the switchgear device showing connection between the first connecting member and the second connecting member therein, in accordance with the second embodiment of the present disclosure;
- FIGS 5E-5H: are diagrammatic view representations of stages involved in assembly of the switchgear device, in accordance with the second embodiment of the present disclosure;
- FIG 6A: is a diagrammatic partial section view representation of a switchgear device, in accordance with a third embodiment of the present disclosure;
- FIG 6B: is a diagrammatic perspective view representation of a first connecting member for the switchgear device, in accordance with the third embodiment of the present disclosure;
- FIG 6C: is a diagrammatic perspective view representation of an annular insert of the first connecting member for the switchgear device, in accordance with the third embodiment of the present disclosure;
- FIG 6D: is a diagrammatic perspective view representation of a second connecting member for the switchgear device, in accordance with the third embodiment of the present disclosure;
- FIG 6E: is a diagrammatic enlarged view representation of a portion of the switchgear device showing connection between the first connecting member and the second connecting member therein, in accordance with the third embodiment of the present disclosure;
- FIGS 6F-6I: are diagrammatic view representations of stages involved in assembly of the switchgear device, in accordance with the third embodiment of the present disclosure; and

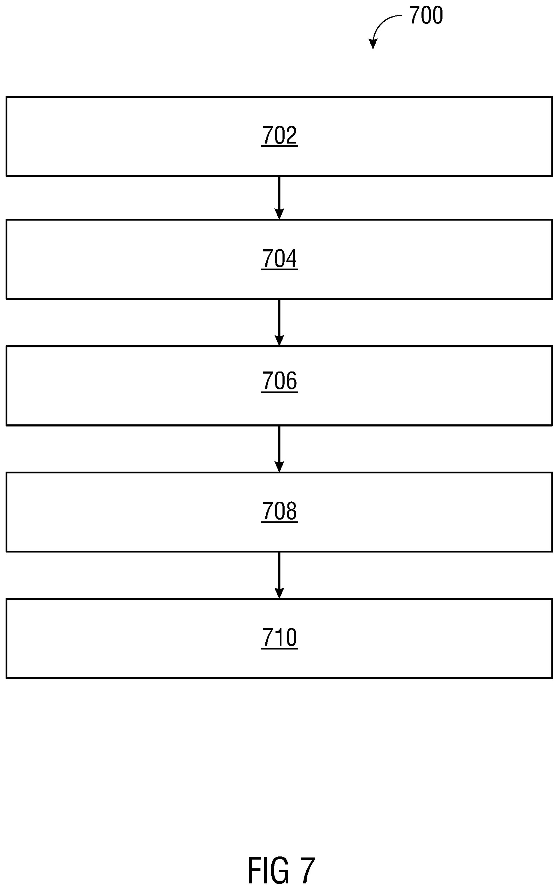

- FIG 7: is a flowchart listing steps involved in a method of assembling the switchgear device, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It is apparent, however, to one skilled in the art that the embodiments of the present disclosure may be practiced without these specific details or with an equivalent arrangement. In other instances, well-known structures and devices are shown in block diagram form in order to avoid unnecessarily obscuring the embodiments of the present disclosure.

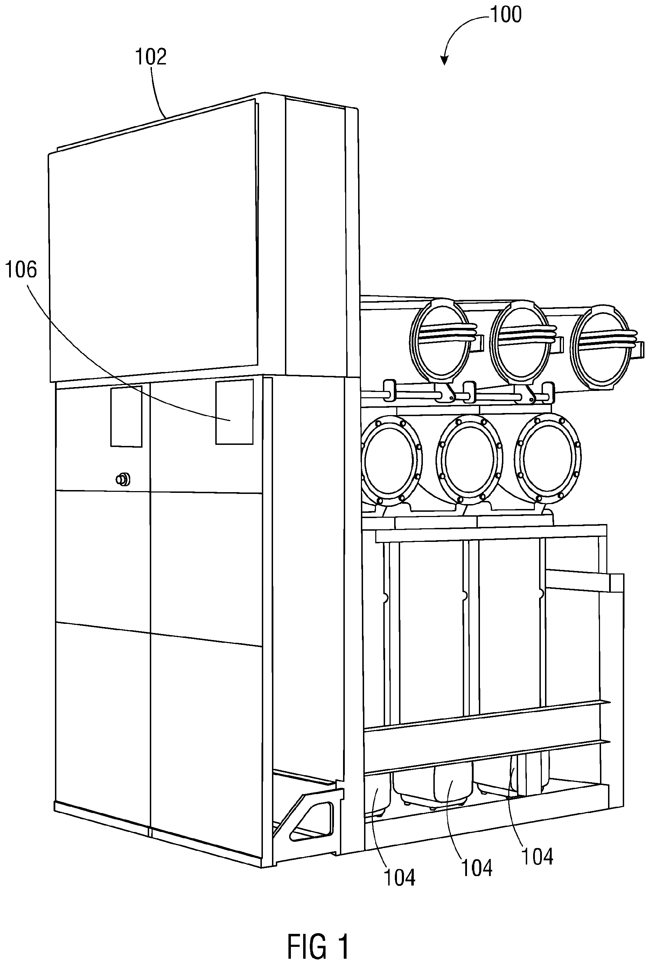

FIG 1 is a diagrammatic perspective view representation of an exemplary switchgear device 100, in accordance with one or more embodiments of the present disclosure. Example embodiments of a switchgear device 100 described herein is a vacuum interrupter based switchgear which may be included in a medium voltage switchgear unit. The present switchgear device 100 may be used in several different applications, for instance, for capacitor switching or for sectionalizing a line or system of switches. The switchgear device 100 may also be molded into a "load break" elbow connector to interrupt currents of medium voltage distribution systems. The switchgear device 100 may be connected to a generator or to a consumer line, in which the generator or the consumer line is disconnectable from or connectable to the energy line by means of the switching device, as per the embodiments of the present disclosure. In the present embodiments, the switchgear device 100 may be implemented as a gas-insulated switchgear, a vacuum interrupter or an air-break disconnector.

In the present illustration, the switchgear device 100 is depicted as a three-phase medium voltage switchgear, that is to say the switchgear device 100 has a plurality of phase conductor sections, which are used to transmit electrical power by means of a polyphase electrical power system. Herein, the switchgear device 100 and further modules of the switchgear device 100, and therefore the entire polyphase switchgear device 100, are designed for three phases; however, it may be contemplated that for the purposes of the present disclosure, the switchgear device 100 may be a single phase or any other type of switchgear as known in the art. As illustrated, the switchgear device 100 includes a housing 102 supporting three pole assemblies 104 therein, with each pole assembly 104 (sometimes, simply referred to as a pole 104) responsible for a single phase in the three-phase switchgear device 100 of the present disclosure. The switchgear device 100 may further include a control panel (generally represented by the numeral 106) which acts on a switching shaft (not shown) common to all the poles 104 of the switchgear device 100.

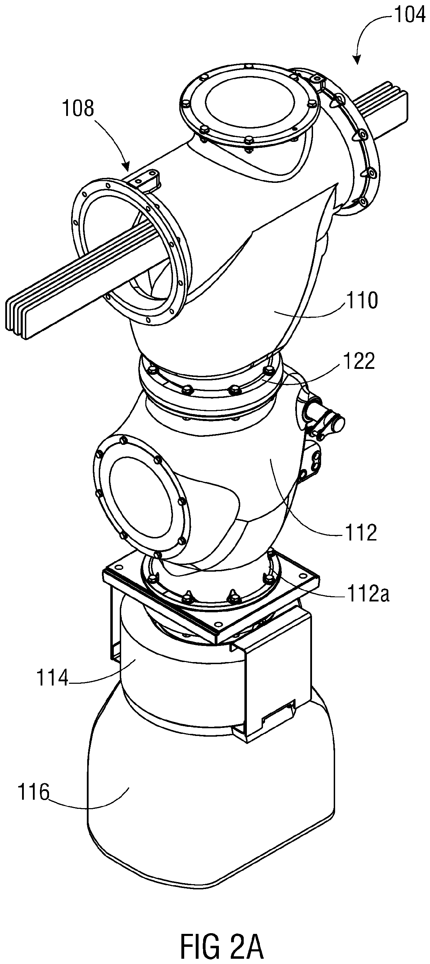

FIG 2A is a diagrammatic perspective view representation of the pole assembly 104 of the switchgear device 100, in accordance with an embodiment of the present disclosure. As illustrated, the pole assembly 104 includes an enclosure 108. The enclosure 108 is generally hollow and may have any suitable shape based on the design and configuration of the switchgear device 100. Herein, the enclosure 108 is typically grounded during operation, i.e., electrically connected to earth. Advantageously, the enclosure 108 is made of a suitable electrically conductive material, e.g., aluminum, such as cast aluminum. Casting, or molding, an aluminum enclosure is a non-expensive procedure. However, the enclosure 108 can also be made of copper, zinc or any other suitable electrically conductive material. Advantageously, the enclosure 108 may be strategically plated with nickel or silver at certain locations, e.g., at electric connection areas.

In the switchgear device 100, the enclosure 108 is filled with an insulating gas. In the present embodiments, the insulating gas is sulfur hexafluoride (SF6) free gas. In a particular embodiment, the insulating gas is an eco-friendly insulating gas comprising a mixture of carbon dioxide gas and nitrogen gas. In one example, the insulating gas may have carbon dioxide gas and nitrogen gas in a ratio of 20:80. In another example, the insulating gas may have carbon dioxide gas and nitrogen gas in a ratio of 40:60. It may be appreciated that the given ratios are exemplary only and shall not be construed as limiting to the present disclosure in any manner. Alternatively, as a gaseous insulating medium, various insulating gases, in particular hydrofluoroolefins, perfluoroketones, perfluoronitriles, hydrofluoroxiranes, perfluoroxiranes, hydrofluoroethers, perfluoroether, or a mixture of said gases may be utilized. These are media which, at the operating temperature of the high or medium-voltage arrangements, are generally gaseous, or liquid and gaseous with a gaseous fraction having a high dielectric strength. It may be understood that in order to accommodate the insulating gas, the enclosure 108 is sealed and in turn may preferably be made of a material which is gas-impermeable, such as glass, polymers, or resins.

In some examples, a filler material (not shown) may be provided in the housing 102 (as shown in FIG 1), surrounding the enclosure 108 filled with the gaseous insulating medium, with the filler material having preferably a higher specific permittivity as compared to the enclosure 108 filled with the gaseous insulating medium. This relationship reduces dielectric requirements for the insulating gas because the electric field is increased in areas of low electrical permittivity over areas of high dielectric permittivity. The filler material may be a liquid dielectric, a solid dielectric, but also supercritical fluids, suspensions, in particular colloids or other mixed-phase substances. A liquid fluid may in particular be an oil based on fluorinated hydrocarbons or a silicone oil. A solid fluid may be a polymer or a resin. In principle, the filler material may also be a gas which has a higher dielectric strength than the gaseous insulating medium in the hollow enclosure 108. In this case, it is not necessary that the filler material has a higher dielectric permittivity than the hollow spheres with the gaseous insulating medium.

In some implementations, an outer shape, or an outer geometry, of the enclosure 108 is smooth to distribute the electric field generated by the current through the switchgear device 100. The outer surface of the enclosure 108 is designed to be smooth to distribute the electric field generated by the current through the switchgear device 100. The outer surface of the enclosure 108 is smooth in that the enclosure 108 does not have an angular outer shape and is without roughness. That is, the outer surface of the enclosure 108 is smooth in that the outer surface has no roughness, sharp projections or sharp indentations.

Referring again to FIG 2A, the enclosure 108 is generally divided, such that each pole 104 of the switchgear device 100 includes a bus-bar housing 110, a circuit-breaker housing 112, a transformer housing 114 and a cable housing 116. It may be appreciated that each of the bus-bar housing 110, the circuit-breaker housing 112, the transformer housing 114 and the cable housing 116 forms a part or a section of the enclosure 108 of the switchgear device 100. Hereinafter, the various components and assemblies of the bus-bar housing 110, the circuit-breaker housing 112, the transformer housing 114 and the cable housing 116 have been described generally being part of the pole assembly 102 and/or the switchgear device 100 without any limitations. As discussed, it may be understood that the enclosure 108, with all the sections therein, is filled with the insulating gas. That is, each of the bus-bar housing 110, the circuit-breaker housing 112, the transformer housing 114 and the cable housing 116 therein, is filled with the insulating gas as described above.

Generally, the pole assembly 104 includes a first electric terminal (not shown) and a second electric terminal (not shown) of the switchgear device 100. Typically, the first electric terminal is received generally in the bus-bar housing 110; and the second electric terminal is received generally in the cable housing 116. It may be appreciated that the first electric terminal and the second electric terminal may each include multiple electrical lines based on the design and configuration (e.g., multi-phase configuration) of the switchgear device 100. In some examples, the first electric terminal and the second electric terminal may be busbars, but can also be in the form of any other electrical conductor without any limitations. In particular, the first electric terminal and the second electric terminal may include a number of electrical bushings (not shown) penetrating into the respective bus-bar housing 110 and the cable housing 116, one for each phase of a plural phase system. The bushings may be brazed in end covers. On the outside of the enclosure 108, the first electric terminal and the second electric terminal are connected to cables (not shown) which either connect the switchgear device 100 to a load or to a medium or high voltage power distribution line. In some examples, the first electric terminal and the second electric terminal may each engage a fitting (not shown) to join the power cables of the power distribution line. Hereinafter, the term "pole assembly" has been generally used to denote "switchgear" and vice-versa, as teachings for the one would be applicable for other for purposes of the present disclosure.

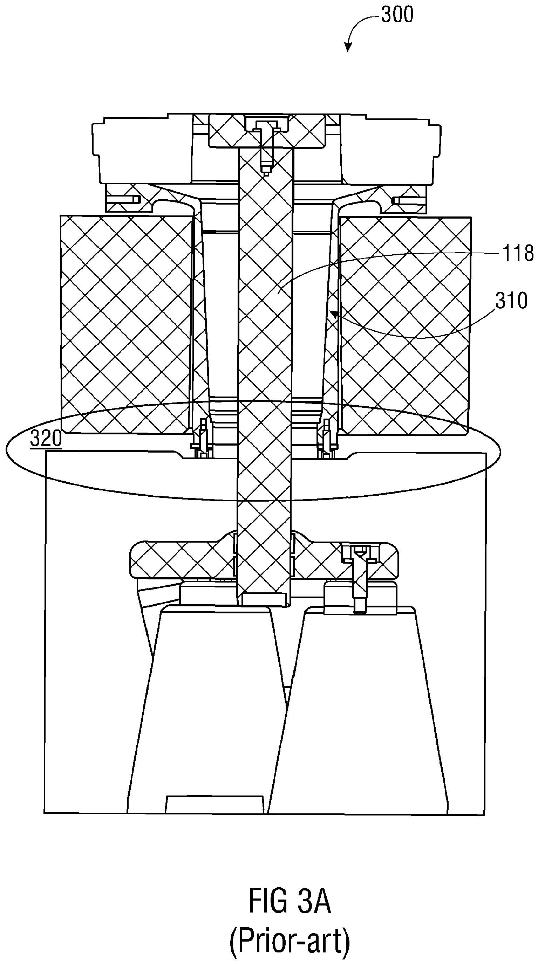

Referring to FIG 3A, a partial section view of a switchgear device 300 is shown as per the conventional design. Conventionally, the switchgear device 300 also includes a conductor rod (represented by a reference numeral 118), generally connecting the said first terminal and the second terminal in the switchgear device 300. AS shown in FIG 3A, the conductor rod 118 is arranged inside a connecting member 310.

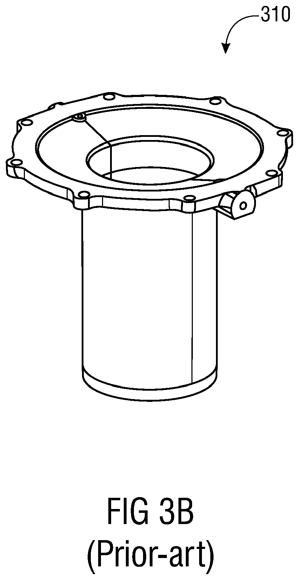

FIG 3B illustrates a conventional design for the said connecting member 310. Again, referring to FIG 3A, as may be seen from a section 320 showing connection between the transformer housing and the cable housing, the bolts are directly employed for connecting the said connecting member 310 therebetween. As discussed, the connecting member 310 may be filled with SF6 gas or the like with high dielectric strength. With such high dielectric strength, it may be possible to implement such connection between the transformer housing and the cable housing as per the conventional design.

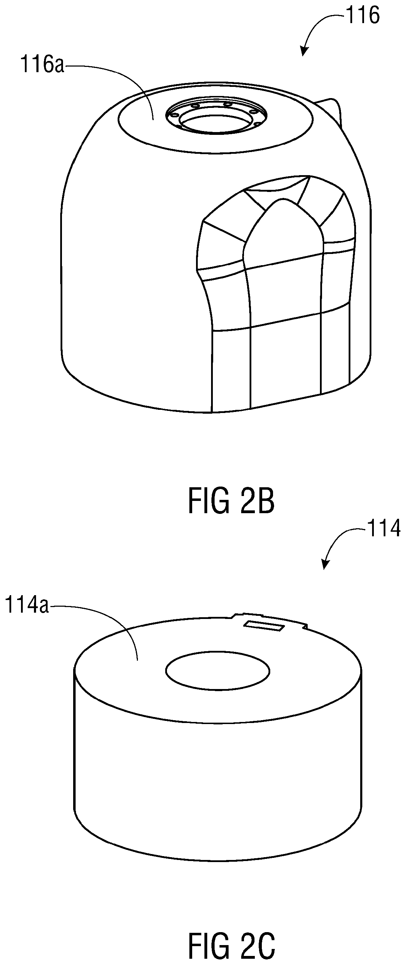

It may be understood that a similar conductor rod 118 (although not shown in FIG 1 or FIGS 2A-2C) is also implemented in the currently disclosed design for the switchgear device 100. In the embodiments of the present disclosure, the conductor rod 118 is in the form of an elongate cylindrical member which extends from the circuit-breaker housing 112, through the transformer housing 114, and into the cable housing 116 to be connected to the second terminal therein. In the switchgear device 100, each of the transformer housing 114 and the cable housing 116 have a generally hollow spherical/cylindrical shape, to allow for the conductor rod 118 to pass through. As may be appreciated from FIGS 2A and 3A in combination, the conductor rod 118 extends from the circuit-breaker housing 112 from a first end 112a (as shown in FIG 2A) thereof. FIG 2B and 2C depict design of the transformer housing 114 and the cable housing 116 respectively. As may be appreciated from FIGS 2A-2C in combination, the conductor rod 118 extends from the circuit-breaker housing 112 from a first end 112a thereof, and be received in the transformer housing 114 via a first end 114a (as shown in FIG 2B) thereof and exits from the transformer housing 114 via an opposite second end (not shown) thereof, and further be received in the cable housing 116 via a first end 116a (as shown in FIG 2C) thereof and exits from the cable housing 116 via an opposite second end (not shown) thereof. Herein, the first end 112a of the circuit-breaker housing 112, the first end 114a and the second end of the transformer housing 114 and the first end 116a of the cable housing 116 provide respective circular openings to allow for the conductor rod 118 from one of the sections to extend into the other section, as may be required for establishing electrical connection, for opening and closing a circuit between the first electric terminal and the second electric terminal, in the switchgear device 100.

In embodiments of the present disclosure, the connecting member (as described) is made of cast resin material instead of aluminum or the like. Due to use of cast resin material, the dielectric distance of the connecting member may be sufficient with respect to the conductor rod, as the cast resin material provides somewhat better dielectric strength, and thus helps to keep the installation space compact (as required with use of SF6 free insulating medium). So, an outside diameter of the current transformer housing may remain similar. This offers the possibility of using the same current transformers as in the SF6 system or current transformers that transmit the same power with the same dimensions without increasing the cost. It may be understood though that the cable housing is still made of casted aluminum. The implementation of the existing solution with use of screws and corresponding connection points may still not be possible due to the dielectric clearances. In particular, the distance between the screws (earth potential) and the conductor rod may not be suitable for implementation with SF6 free insulating medium. Another important aspect of this design is to have the rigid and leak-tight connection between the connecting member with cable housing made of Aluminum with maintaining of dielectric requirements.

The embodiments of the present disclosure ensure the fixing connection between the connecting member and the cable housing are as per the requirement. In the present embodiments, the requirement is generally achieved by an additional second connecting member, which is a special-shaped cast resin part designed to support and couple the connecting member and the cable housing. The additional second connecting member is designed in such a way that the connection joint points of the are moved downward insides the cable housing which ensures sufficient dielectric distance from the live connected fixing points to the earthed potential on cable housing connection.

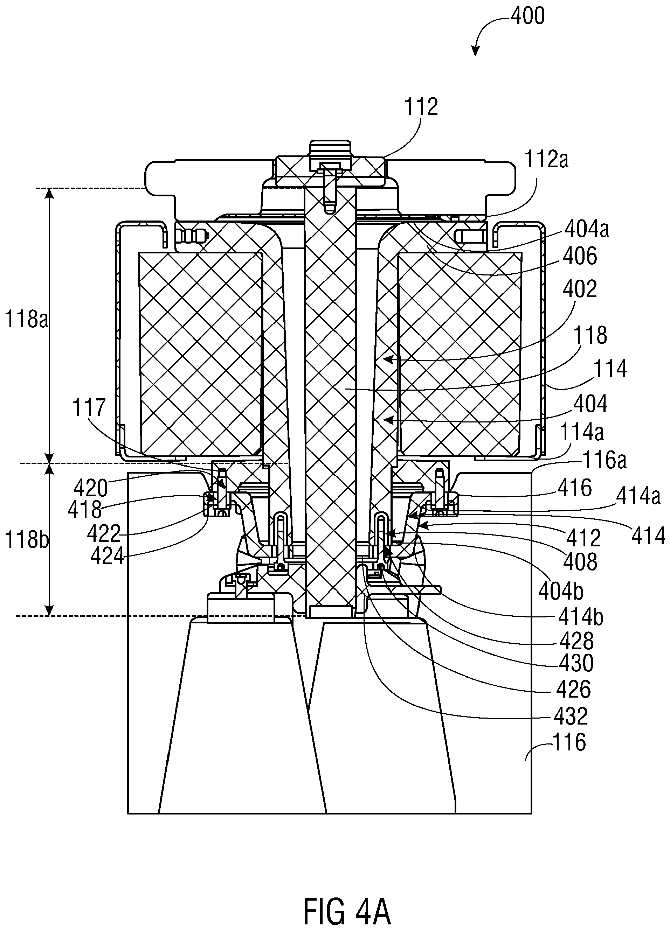

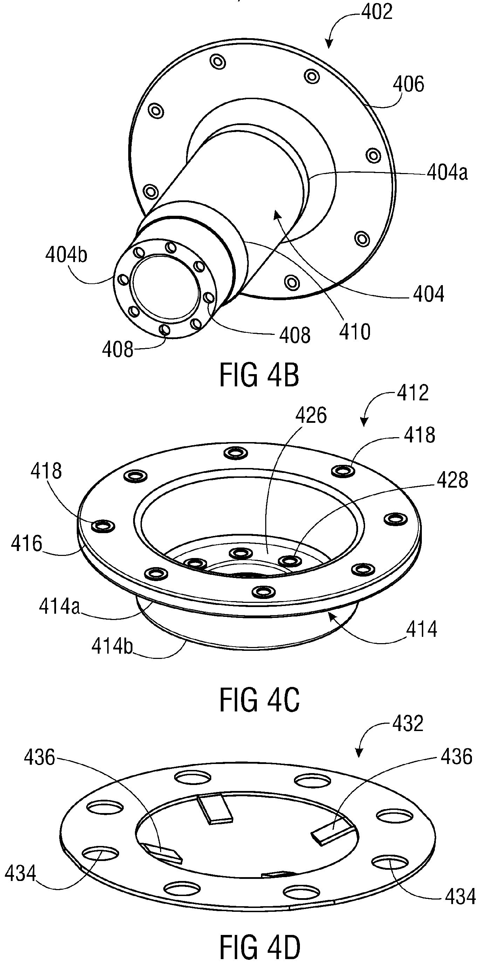

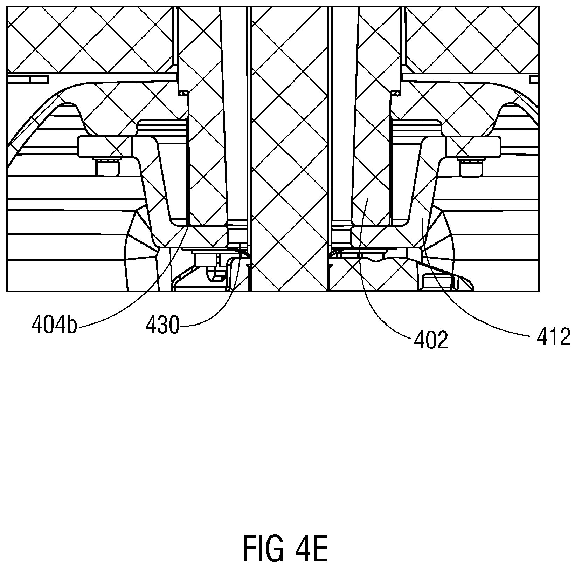

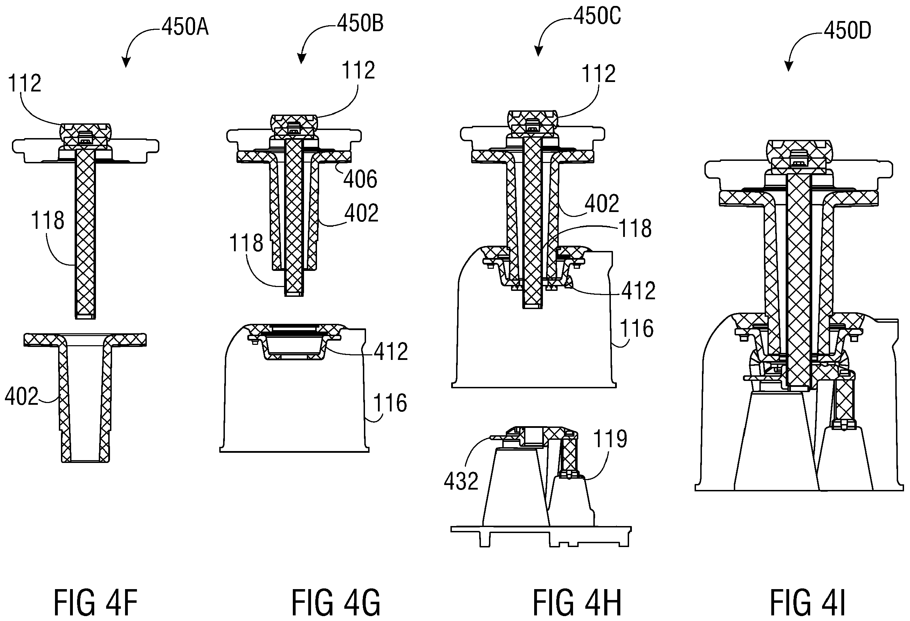

Referring now to FIG 4A, illustrated is a diagrammatic partial section view representation of a switchgear device 400, in accordance with a first embodiment of the present disclosure. As illustrated in FIG 4A, the switchgear device 400 includes a first connecting member 402. FIG 4B illustrates a perspective view of the first connecting member 402. As illustrated, the first connecting member 402 has a hollow cylindrical section 404. The hollow cylindrical section 404 has a first end 404a and a second end 404b. A first flange 406 projects outwardly in a radial direction from a first end 404a of the hollow cylindrical section 404. The first connecting member 402 also has a set of apertures, herein referred to as second insert apertures 408, formed at the second end 404b of the hollow cylindrical section 404 of the first connecting member 402. Further, the first connecting member 402 has a narrower profile towards the second end 404b, and provides a step 410 thereat. Further, as illustrated in FIG 4A, the switchgear device 400 includes a second connecting member 412. FIG 4C illustrates a perspective view of the second connecting member 412. As illustrated, the second connecting member 412 has a hollow cylindrical section 414. The hollow cylindrical section 414 has a first end 414a and a second end 414b. A second flange 416 projects outwardly in a radial direction from the first end 414a of the hollow cylindrical section 414 of the second connecting member 412.

Further, as shown, the second flange 416 has a set of apertures, herein referred to as first insert apertures 418 formed therein. Further, as illustrated in FIG 4A, the switchgear device 400 includes a conducting member 432. FIG 4C illustrates a perspective view of the conducting member 432. As illustrated, the conducting member 432 may have a sheet-metal profile. The conducting member 432 also has a set of apertures, referred to as conducting member apertures 434 herein.

Also, as shown, the conducting member 432 also include extensions 436 extending inwardly in the conducting member 432.

Referring back to FIG 4A, as may be seen, the first flange 406 of the first connecting member 402 is mounted to the first end 112a of the circuit-breaker housing 112. Herein, a first portion 118a of the conductor rod 118, extending from the first end 112a of the circuit-breaker housing 112, is received in the hollow cylindrical section 404 of the first connecting member 402. Further, the second connecting member 412 is mounted at or proximal to the second end 404b of the first connecting member 402 such that a second portion 118b of the conductor rod 118 (continuing from the first portion 118a thereof) is received in and extends through the hollow cylindrical section 414 of the second connecting member 412. Further, as illustrated, the cable housing 116 is supported from the first end 116a thereof onto the second connecting member 412, such that the second portion 118b of the conductor rod 118 is received in the cable housing 116. Further, the cable housing 116 is coupled to the second flange 416 of the second connecting member 412 using a set of first bolts 420 passing through a set of apertures 117 in the cable housing 116 at the first end 116a thereof and the set of first insert apertures 418. This way the cable housing 116 is mounted in the present switchgear device 400. This also ensures the loosening of the first bolts 420 in different dynamic loading conditions, if required.

Furthermore, as illustrated in FIG 4C, the second connecting member 412 has a third flange 426 projecting inwardly in a radial direction from the second end 414b of the hollow cylindrical section 414 thereof. Herein, the third flange 426 has a set of apertures, herein referred to as set of third insert apertures 428 formed therein. Referring back to FIG 4A and further to FIG 4D, as illustrated, the second connecting member 412 is coupled to the first connecting member 402 using a set of second bolts 430 passing through the respective set of third insert apertures 428 and the second insert apertures 408 therein. This way the first connecting member 402 and the second connecting member 412 are connected in the present switchgear device 400.

Herein, the first connecting member 402 and the second connecting member 412 are designed in such a way that the connection joint points are moved downwards/inwards inside the cable housing 116 which ensures sufficient dielectric distance from the live connected fixing points to the earthed potential for the connections for mounting the cable housing 116. In some examples, each of the first insert apertures 418 includes a conducting insert 422 disposed in electrical contact with the respective first bolt 420 passing therethrough, to dielectrically stabilize at least a shaft portion of the said first bolt 420 from the conductor rod 118. Additionally, or alternatively, in some examples, each of the first insert apertures 418 further comprises an electrode insert 424 embedded in the second flange 416 of the second connecting member 412 and disposed in electrical contact with the conducting insert 422, to dielectrically stabilize at least a head portion of the respective first bolt 420 passing therethrough from the conductor rod 118.

Furthermore, in the present first embodiment, the set of second bolts 430 are required to be kept at live potential. For this purpose, the conducting member 432 is arranged with the third flange 426 of the second connecting member 412, to dispose the set of second bolts 430 in an electrical contact with the conductor rod 118. Herein, the conducting member 432 is mounted to the second connecting member 412 using the set of second bolts 430 passing through the set of third insert apertures 428 in the second connecting member 412 and the conducting member apertures 434 in the conducting member 432. In particular, the extensions 436 in the conducting member 432 are disposed in physical contact with the conductor rod 118. Such design keeps the connection between the primary path from the conductor rod 118 and the set of second bolts 430 at live potential, via the conducting member 432.

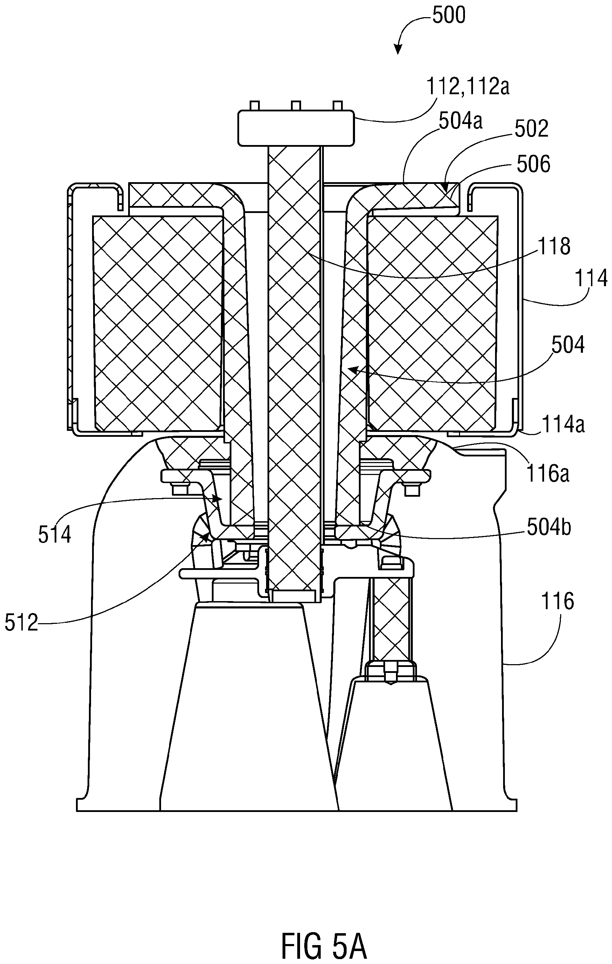

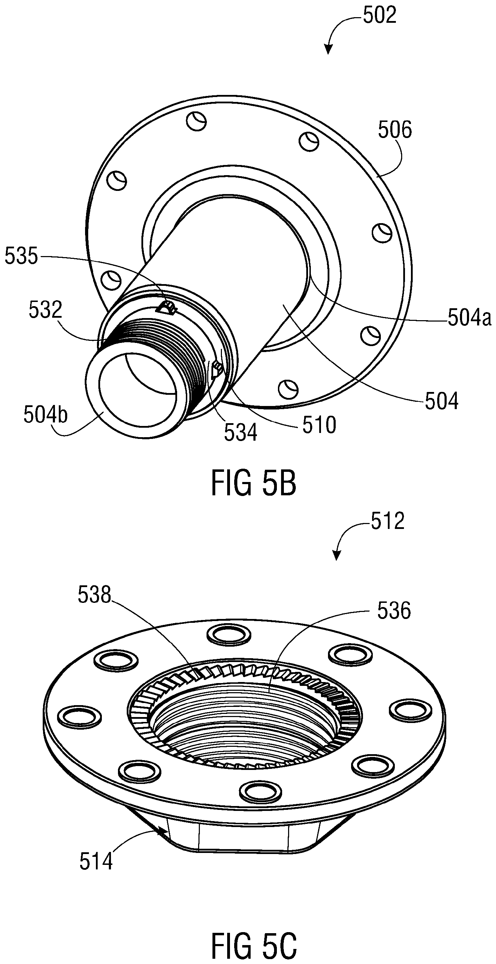

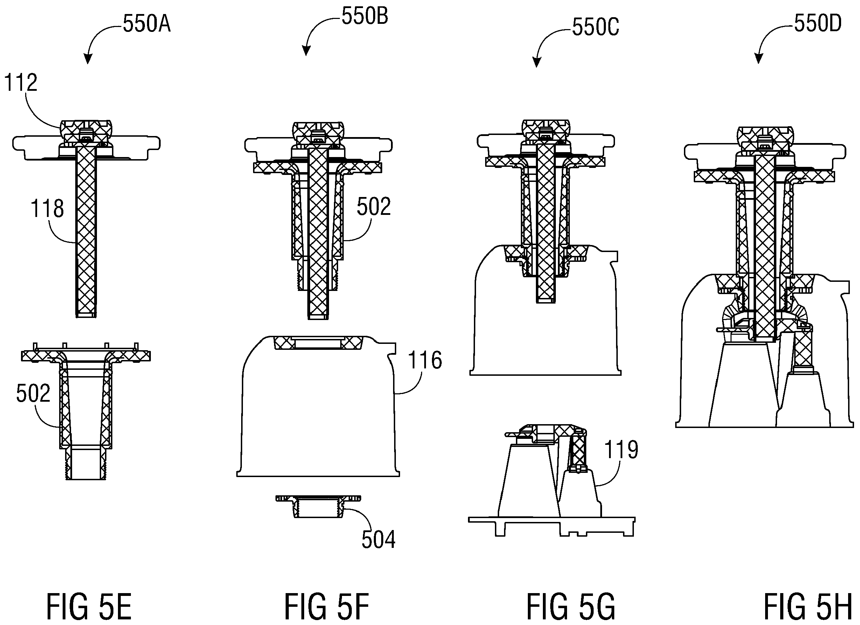

Referring now to FIG 5A, illustrated is a diagrammatic partial section view representation of a switchgear device 500, in accordance with a second embodiment of the present disclosure. Generally similar to the switchgear device 400, the switchgear device 500 includes a first connecting member 502 (as illustrated in FIG 5B) having a hollow cylindrical section 504 and a first flange 506 projecting outwardly in a radial direction from a first end 504a of the hollow cylindrical section 504. Further, the first connecting member 502 has a narrower profile towards the second end 504b, and provides a step 510 thereat. Herein, the first connecting member 502 has external threads 532 defined along an outer side 534 of the hollow cylindrical section 504, proximal to the second end 504b thereof. In some examples, the outer side 534 of the hollow cylindrical section 504 may also include notches 535 defined therein.

The switchgear device 500 also includes a second connecting member 512 (as illustrated in FIG 5C) having a hollow cylindrical section 514. Herein, the second connecting member 512 has internal threads 536. In embodiments of the present disclosure, the internal threads 536 in the second connecting member 512 are formed to be complementary to the external threads 532 in the first connecting member 502. As illustrated, the internal threads 536 are defined along an inner side 538 of the hollow cylindrical section 514 of the second connecting member 512.

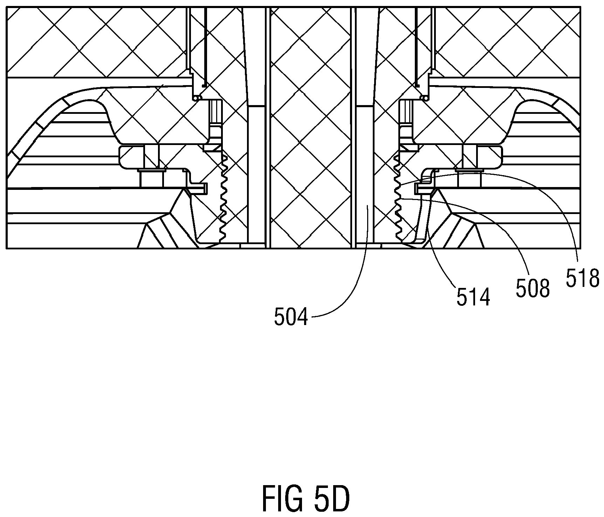

As illustrated in FIG 5A, the first flange 506 of the first connecting member 502 is mounted to the first end 112a of the circuit-breaker housing 112, with a first portion 118a of the conductor rod 118 received in the hollow cylindrical section 504 of the first connecting member 502. Further, the second connecting member 512 is mounted at or proximal to a second end 504b of the first connecting member 502, such that a second portion 118b of the conductor rod 118 is received in and extends through the hollow cylindrical section 514 of the second connecting member 512. The cable housing 116 supported from the first end 116a thereof onto the second connecting member 512, such that the second portion 118b of the conductor rod 118 is received in the cable housing 116. Further, as may be seen, the flange (not labelled) of the second connecting member 512 has apertures to support the cable housing 116 (as described in reference to the first embodiment). Further, the first bolts and other supporting components may be employed for this purpose, as discussed in reference to the first embodiment and not repeated herein for the brevity of the present disclosure. In accordance with the present second embodiment, as better seen in FIG 5D, the external threads 532 in the first connecting member 502 are engaged with the complementary internal threads 536 in the second connecting member 512 to mount the second connecting member 512 to the first connecting member 502. Further, herein, the notches 535 may help with proper orientation of the second connecting member 512 when engaged with the first connecting member 502.

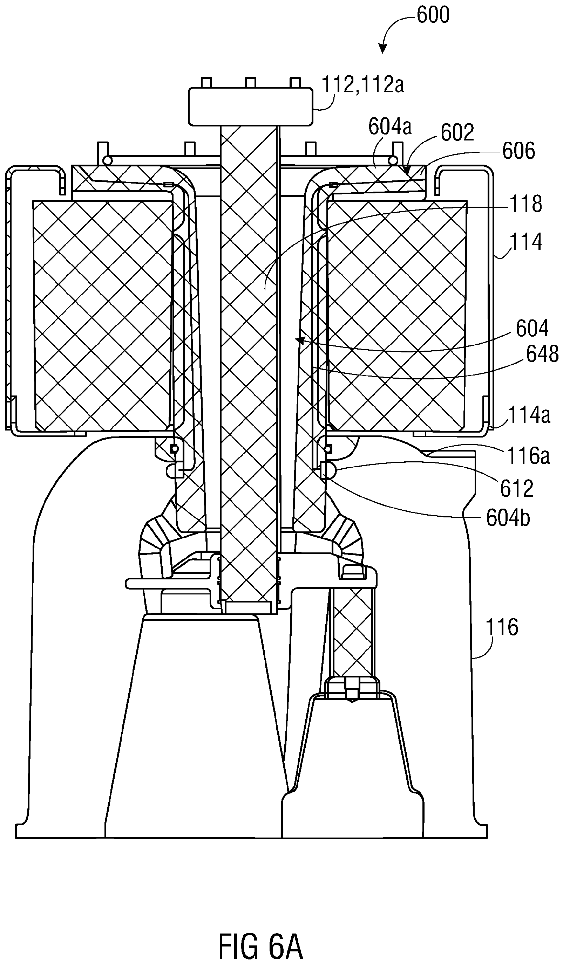

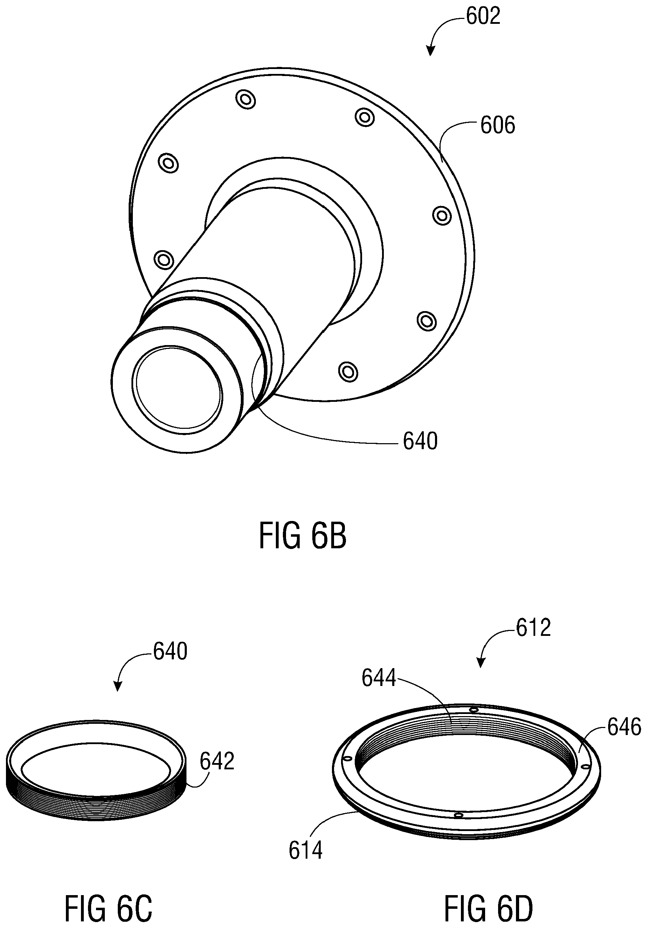

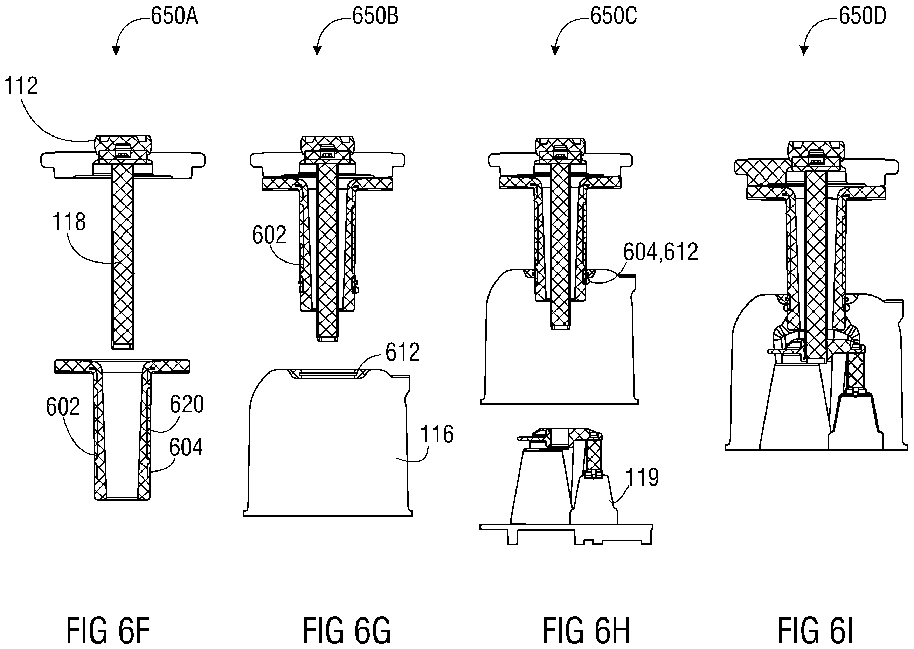

Referring now to FIG 6A, illustrated is a diagrammatic partial section view representation of a switchgear device 600, in accordance with a third embodiment of the present disclosure. Generally similar to the switchgear device 400, 500, the switchgear device 600 includes a first connecting member 602 (as illustrated in FIG 6B) having a hollow cylindrical section 604 and a first flange 606 projecting outwardly in a radial direction from a first end 604a of the hollow cylindrical section 604. Herein, the first connecting member 602 includes an annular insert 640 (as illustrated in FIG 6C). The annular insert 640 has external threads 642. The annular insert 640 is embedded in the first connecting member 602 such that the external threads 642 of the annular insert 640 are exposed. The switchgear device 600 also includes a second connecting member 612 (as illustrated in FIG 6D) having a hollow cylindrical section 614. The second connecting member 612 is in the form of an annular nut with internal threads 644. Further, as may be seen, the second connecting member 612 has a thickness in a radial direction thereof to define a rim 646 therefor.

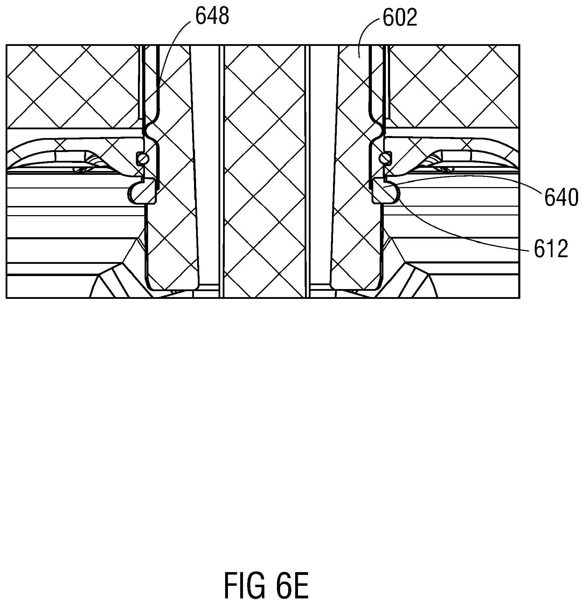

As illustrated in FIG 6A, the first flange 606 of the first connecting member 602 is mounted to the first end 112a of the circuit-breaker housing 112, with a first portion 118a of the conductor rod 118 received in the hollow cylindrical section 604 of the first connecting member 602. Further, the second connecting member 612 is mounted at or proximal to the second end 604b of the first connecting member 602, such that a second portion 118b of the conductor rod 118 is received in and extends through the hollow cylindrical section 614 of the second connecting member 612. The cable housing 116 supported from the first end 116a thereof onto the second connecting member 612, such that the second portion 118b of the conductor rod 118 is received in the cable housing 116. Further, the first bolts and other supporting components may be employed for this purpose, as discussed in reference to the first embodiment and not repeated herein for the brevity of the present disclosure. In accordance with the present third embodiment, as better seen in FIG 6E, the external threads 642 of the annular insert 640 in the first connecting member 602 are engaged with the complementary internal threads 644 in the second connecting member 612 to mount the second connecting member 612 to the first connecting member 602. Further, as may be seen, the cable housing 116 is supported onto the rim 646 of the second connecting member 612.

In some examples, as better seen from FIG 6E, the switchgear device 600 further includes a conducting mesh 648 embedded in the first connecting member 602 and electrically disposed at earth potential. Further, the annular insert 640 in the first connecting member 602 is disposed in an electrical contact with the conducting mesh 648 therein. The conducting mesh 648 is connected to ground potential and ensures that the molded annular insert 640 (metallic part) to which it connects is also disposed at ground potential (as required for proper operation of the switchgear device 600).

In embodiments of the present disclosure, the first connecting member 402, 502, 602 and the second connecting member 412, 512, 612 are made of one or more resin materials. It may be appreciated that the first connecting member 402, 502, 602 and the second connecting member 412, 512, 612 may be made of same or different types of resin materials. In some examples, the switchgear device 100, 400, 500, 600 is provided with axial sealing (not shown) between the transformer housing 114 and the cable housing 116, to ensure rigid and leak-proof connection therebetween.

The embodiments of the present disclosure further enable easier assembly of the switchgear device 100, 400, 500, 600. Herein, the assembly process is simplified compared to conventional assembling of the switchgear (such as, the switchgear device 300) and can take the load of the cable housing and cables. is a flowchart listing steps involved in a method 700 of assembling the switchgear device 100, 400, 500, 600, in accordance with one or more embodiments of the present disclosure.

At step 702, the method 700 includes providing the first connecting member 402, 502, 602 having the hollow cylindrical section 404, 504, 604, and the first flange 406, 506, 606 projecting outwardly in a radial direction from the first end 404a, 504a, 604a of the hollow cylindrical section 404, 504, 604 thereof. At step 704, the method 700 includes mounting the first flange 406, 506, 606 of the first connecting member 402, 502, 602 to the first end 112a of the circuit-breaker housing 112 of the switchgear device 100, 400, 500, 600, with the first portion 118a of the conductor rod 118, extending from the first end 112a of circuit-breaker housing 112, being received in the hollow cylindrical section 404, 504, 604 of the first connecting member 402, 502, 602. At step 706, the method 700 includes providing the second connecting member 412, 512, 612 having the hollow cylindrical section 414, 514, 614. At step 708, the method 700 includes mounting the second connecting member 412, 512, 612 at or proximal to the second end 404b, 504b, 604b of the first connecting member 402, 502, 602, such that the second portion 118b of the conductor rod 118 is received in and extends through the hollow cylindrical section 414, 514, 614 of the second connecting member 412, 512, 612. At step 710, the method 700 includes supporting the cable housing 116 from the first end thereof 116a onto the second connecting member 412, 512, 612, such that the second portion 118b of the conductor rod 118 is received in the cable housing 116.

FIGS 4F-4I are diagrammatic view representations of stages 450A-450D involved in assembly of the switchgear device 400, in accordance with the first embodiment of the present disclosure. Specific to the first embodiment for assembling the switchgear device 400, the method 700 further includes providing the first connecting member 402 with the set of second insert apertures 408 in the hollow cylindrical section 404 at the second end 404b thereof. The method 700 further includes providing the second connecting member 412 having the second flange 416 projecting outwardly in the radial direction from the first end 414a of the hollow cylindrical section 414 thereof, with the second flange 416 having the set of first insert apertures 418 formed therein, and the third flange 426 projecting inwardly in the radial direction from the second end 404b of the hollow cylindrical section 404 thereof, with the third flange 426 having the set of third insert apertures 428 formed therein. The method 700 further includes coupling the cable housing 116 to the second flange 416 of the second connecting member 412 using the set of first bolts 420 passing through the set of apertures 117 in the cable housing 116 at the first end 116a thereof and the set of first insert apertures 418 to form a first sub-assembly. The method 700 further includes sliding the first sub-assembly along the second portion 118b of the conductor rod 118. The method 700 further includes coupling the second connecting member 412 to the first connecting member 402 using the set of second bolts 430 passing through the respective set of third insert apertures 428 and the second insert apertures 408 therein. The method 700 further includes arranging the conducting member 432 with the third flange 426 of the second connecting member 412, disposing the set of second bolts 430 in electrical contact with the conductor rod 118. Herein, in particular, as may be seen from FIGS 4F-4I, first, the conductor rod 118 is fixed with the circuit-breaker housing 112; after that the first connecting member 402 is fixed with the cable housing 116; then the second connecting member 412 is fixed with the cable housing 116 separately as a sub-assembly; and this sub-assembly is fixed with the first connecting member 402; and finally another sub-assembly of cover plate with the terminal is prepared separately and assembled with the cable housing 116.

FIGS 5E-5H are diagrammatic view representations of stages 550A-550D involved in assembly of the switchgear device 500, in accordance with the second embodiment of the present disclosure. Specific to the second embodiment for assembling the switchgear device 500, the method 700 further includes providing the first connecting member 502 with the external threads 532 defined along the outer side 534 of the hollow cylindrical section 504, proximal to the second end 504b thereof. The method 700 further includes providing the second connecting member 512 with internal threads 536, complementary to the external threads 532 in the first connecting member 502, defined along the inner side 538 of the hollow cylindrical section 514 thereof. The method 700 further includes sliding the cable housing 116 along the second portion 118b of the conductor rod 118. The method 700 further includes sliding the second connecting member 512 along the second portion 118b of the conductor rod 118, such that the first end 116a of the cable housing 116 is disposed between the first connecting member 502 and the second connecting member 512. The method 700 further includes engaging the external threads 532 in the first connecting member 502 with the complementary internal threads 536 in the second connecting member 512 to mount the second connecting member 512 to the first connecting member 502, and thereby supporting the cable housing 116 onto the second connecting member 612. Herein, in particular, the method 700 includes coupling the cable housing 116 to the second flange (such as, the second flange 416) of the second connecting member 512 using the set of first bolts (such as, the set of first bolts 420) passing through the set of apertures 117 in the cable housing 116 at the first end 116a thereof and the set of first insert apertures in the second flange of the second connecting member 512. The specific assembly process for the switchgear device 500 of the second embodiment is generally similar to the stages 450A-450D as described above with reference to the switchgear device 400 of the first embodiment, and thus not repeated herein for the brevity of the present disclosure.

FIGS 6F-6I are diagrammatic view representations of stages 650A-650D involved in assembly of the switchgear device 600, in accordance with the third embodiment of the present disclosure. Specific to the third embodiment for assembling the switchgear device 600, the method 700 further includes providing the first connecting member 602 having the annular insert 640 with external threads 642 embedded therein such that the external threads 642 of the annular insert 640 are exposed. The method 700 further includes providing the second connecting member 612 in the form of the annular nut with internal threads 644 and having a thickness in the radial direction thereof to define the rim 646 therefor. The method 700 further includes sliding the cable housing 116 along the second portion 118b of the conductor rod 118. The method 700 further includes sliding the second connecting member 612 along the second portion 118b of the conductor rod 118, such that the first end 116a of the cable housing 116 is disposed between the first connecting member 602 and the second connecting member 612. The method 700 further includes engaging the external threads 642 of the annular insert 640 in the first connecting member 602 with the complementary internal threads 646 in the second connecting member 612 to mount the second connecting member 612 to the first connecting member 602, and thereby supporting the cable housing 116 onto the rim 648 of the second connecting member 612. The specific assembly process for the switchgear device 600 of the third embodiment is generally similar to the stages 450A-450D as described above with reference to the switchgear device 400 of the first embodiment, and thus not repeated herein for the brevity of the present disclosure. It may be appreciated that the assembly process for the switchgear device 600 replaces eight or so number of screws connection with one single nut system.

The switchgear device 100, 400, 500, 600 of the present disclosure provides rigid and leak proof connection between the (first) connecting member and the cable housing due to use of the second connecting member, which may also be in the form of metallic threaded joint in one embodiment. The present design reduces dielectric stresses in connection area, and the electric field is distributed properly due to this additional second connecting member. In case of the switchgear device 400, the electric field distribution around the fixing bolts is reduced with additional connecting sheet metal part (conducting member) and electrode around the fixing bolts. In case of the switchgear device 500, 600, mechanical stability is improved with fixing using thread joints and bolted connection. Herein, no connection is visible from outside for the first connecting member and the cable housing. The present design of the switchgear device provides more dielectric clearance, which is especially useful in case of newer switching devices using clean air insulating gases, such as combination of mixture of carbon dioxide gas and nitrogen gas, or in general any SF6-free gas. The switchgear device 100, 400, 500, 600 of the present disclosure achieve dielectric test values like SF6 products for 36KV rating could be possible for SF6 free products. Furter, existing dimensions of the current transformer can be used, and thus do not require any significant changes in manufacturing process.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

### REFERENCE NUMERALS

- switchgear device: 100
- housing: 102
- pole assembly: 104
- control panel: 106
- enclosure: 108
- bus-bar housing: 110
- circuit-breaker housing: 112
- first end of circuit-breaker housing: 112a
- transformer housing: 114
- first end of transformer housing: 114a
- first end of cable bushing housing: 116a
- set of apertures in cable housing: 117
- conductor rod: 118
- first portion of conductor rod: 118a
- second portion of conductor rod: 118b
- switchgear device: 300
- connecting member: 310
- section: 320
- switchgear device: 400
- first connecting member: 402
- hollow cylindrical section: 404
- first end of hollow cylindrical section: 404a
- second end of hollow cylindrical section: 404b
- first flange: 406
- second insert apertures: 408
- step: 410
- second connecting member: 412
- hollow cylindrical section: 414
- first end hollow cylindrical section: 414a
- second end hollow cylindrical section: 414b
- second flange: 416
- first insert apertures: 418
- set of first bolts: 420
- conducting insert: 422
- electrode insert: 424
- third flange: 426
- third insert apertures: 428
- set of second bolts: 430
- conducting member: 432
- conducting member apertures: 434
- extensions: 436
- stage: 450a
- stage: 450b
- stage: 450c
- stage: 450d
- switchgear device: 500
- first connecting member: 502
- hollow cylindrical section: 504
- first end of hollow cylindrical section: 504a
- second end of hollow cylindrical section: 504b
- first flange: 506
- step: 510
- second connecting member: 512
- hollow cylindrical section: 514
- external threads: 532
- outer side of hollow cylindrical section: 534
- notches: 535
- internal threads: 536
- inner side: 538
- stage: 550a
- stage: 550b
- stage: 550c
- stage: 550d
- switchgear device: 600
- first connecting member: 602
- hollow cylindrical section: 604
- first end of hollow cylindrical section: 604a
- second end of hollow cylindrical section: 604b
- first flange: 606
- second connecting member: 612
- hollow cylindrical section: 614
- annular insert: 640
- external threads: 642
- internal threads: 644
- rim: 646
- conducting mesh: 648
- stage: 650a
- stage: 650b
- stage: 650c
- stage: 650d
- flowchart: 700
- step: 702
- step: 704
- step: 706
- step: 708
- step: 710

## Claims

1. A switchgear device (100, 400, 500, 600) comprising:
a circuit-breaker housing (112) having a conductor rod (118) extending from a first end (112a) thereof;
a first connecting member (402, 502, 602) having a hollow cylindrical section (404, 504, 604) and a first flange (406, 506, 606) projecting outwardly in a radial direction from a first end (404a, 504a, 604a) of the hollow cylindrical section (404, 504, 604), wherein the first flange (406, 506, 606) of the first connecting member (402, 502, 602) is mounted to the first end (112a) of the circuit-breaker housing (112), with a first portion (118a) of the conductor rod (118) received in the hollow cylindrical section (404, 504, 604) of the first connecting member (402, 502, 602);
a second connecting member (412, 512, 612) having a hollow cylindrical section (414, 514, 614), wherein the second connecting member (412, 512, 612) is mounted at or proximal to a second end (404b, 504b, 604b) of the first connecting member (402, 502, 602), such that a second portion (118b) of the conductor rod (118) is received in and extends through the hollow cylindrical section (414, 514, 614) of the second connecting member (412, 512, 612); and
a cable housing (116) supported from a first end (116a) thereof onto the second connecting member (412, 512, 612), such that the second portion (118b) of the conductor rod (118) is received in the cable housing (116).

2. The switchgear device (400) as claimed in claim 1, wherein the second connecting member (412) has a second flange (416) projecting outwardly in a radial direction from a first end (414a) of the hollow cylindrical section (414) thereof, with the second flange (416) having a set of first insert apertures (418) formed therein, and wherein the cable housing (116) is coupled to the second flange (416) of the second connecting member (412) using a set of first bolts (420) passing through a set of apertures (117) in the cable housing (116) at the first end (116a) thereof and the set of first insert apertures (418).

3. The switchgear device (400) as claimed in claim 2, wherein each of the first insert apertures (418) comprises a conducting insert (422) disposed in electrical contact with the respective first bolt (420) passing therethrough, to dielectrically stabilize at least a shaft portion of the said first bolt (420) from the conductor rod (118).

4. The switchgear device (400) as claimed in claim 3, wherein each of the first insert apertures (418) further comprises an electrode insert (424) embedded in the second flange (416) of the second connecting member (412) and disposed in electrical contact with the conducting insert (422), to dielectrically stabilize at least a head portion of the respective first bolt (420) passing therethrough from the conductor rod (118).

5. The switchgear device (400) as claimed in claim 1, wherein the first connecting member (402) has a set of second insert apertures (408) formed at the second end (404b) of the hollow cylindrical section (404) thereof, and wherein the second connecting member (412) has a third flange (426) projecting inwardly in a radial direction from a second end (414b) of the hollow cylindrical section (414) thereof, with the third flange (426) having a set of third insert apertures (428) formed therein, and wherein the second connecting member (412) is coupled to the first connecting member (402) using a set of second bolts (430) passing through the respective set of third insert apertures (428) and the second insert apertures (408) therein.

6. The switchgear device (400) as claimed in claim 5 further comprising a conducting member (432) arranged with the third flange (426) of the second connecting member (412), to dispose the set of second bolts (430) in an electrical contact with the conductor rod (118).

7. The switchgear device (500) as claimed in claim 1, wherein the first connecting member (502) has external threads (532) defined along an outer side (534) of the hollow cylindrical section (504), proximal to the second end (504b) thereof, and wherein the second connecting member (512) has internal threads (536), complementary to the external threads (532) in the first connecting member (502), defined along an inner side (538) of the hollow cylindrical section (514) thereof, and wherein the external threads (532) in the first connecting member (502) are engaged with the complementary internal threads (536) in the second connecting member (512) to mount the second connecting member (512) to the first connecting member (502).

8. The switchgear device (600) as claimed in claim 1, wherein the first connecting member (602) comprises an annular insert (640) with external threads (642) embedded therein such that the external threads (642) of the annular insert (640) are exposed, and wherein the second connecting member (612) is in the form of an annular nut with internal threads (644), and wherein the external threads (642) of the annular insert (640) in the first connecting member (602) are engaged with the complementary internal threads (644) in the second connecting member (612) to mount the second connecting member (612) to the first connecting member (602).

9. The switchgear device (600) as claimed in claim 8, wherein the second connecting member (612) has a thickness in a radial direction thereof to define a rim (646) therefor, and wherein the cable housing (116) is supported onto the rim (646) of the second connecting member (612).

10. The switchgear device (600) as claimed in claim 8 further comprising a conducting mesh (648) embedded in the first connecting member (602) and electrically disposed at earth potential, wherein the annular insert (640) in the first connecting member (602) is disposed in an electrical contact with the conducting mesh (648) therein.

11. The switchgear device (100, 400, 500, 600) as claimed in claim 1, wherein the first connecting member (402, 502, 602) and the second connecting member (412, 512, 612) are made of one or more resin materials.

12. A method (700) of assembling a switchgear device (100, 400, 500, 600), the method (700) comprising:
providing a first connecting member (402, 502, 602) having a hollow cylindrical section (404, 504, 604), and a first flange (406, 506, 606) projecting outwardly in a radial direction from a first end (404a, 504a, 604a) of the hollow cylindrical section (404, 504, 604) thereof;
mounting the first flange (406, 506, 606) of the first connecting member (402, 502, 602) to a first end (112a) of a circuit-breaker housing (112) of the switchgear device (100, 400, 500, 600), with a first portion (118a) of a conductor rod (118), extending from the first end (112a) of circuit-breaker housing (112), being received in the hollow cylindrical section (404, 504, 604) of the first connecting member (402, 502, 602);
providing a second connecting member (412, 512, 612) having a hollow cylindrical section (414, 514, 614);
mounting the second connecting member (412, 512, 612) at or proximal to a second end (404b, 504b, 604b) of the first connecting member (402, 502, 602), such that a second portion (118b) of the conductor rod (118) is received in and extends through the hollow cylindrical section (414, 514, 614) of the second connecting member (412, 512, 612); and
supporting a cable housing (116) from a first end (116a) thereof onto the second connecting member (412, 512, 612), such that the second portion (118b) of the conductor rod (118) is received in the cable housing (116).

13. The method (700) as claimed in claim 12 further comprising:
providing the first connecting member (402) with a set of second insert apertures (408) in the hollow cylindrical section (404) at the second end (404b) thereof;
providing the second connecting member (412) having a second flange (416) projecting outwardly in a radial direction from a first end (414a) of the hollow cylindrical section (414) thereof, with the second flange (416) having a set of first insert apertures (418) formed therein, and a third flange (426) projecting inwardly in the radial direction from a second end (414b) of the hollow cylindrical section (414) thereof, with the third flange (414b) having a set of third insert apertures (428) formed therein;
coupling the cable housing (116) to the second flange (416) of the second connecting member (412) using a set of first bolts (420) passing through a set of apertures (117) in the cable housing (116) at the first end (116a) thereof and the set of first insert apertures (418) to form a first sub-assembly;
sliding the first sub-assembly along the second portion (118b) of the conductor rod (118);
coupling the second connecting member (412) to the first connecting member (402) using a set of second bolts (430) passing through the respective set of third insert apertures (428) and the second insert apertures (408) therein; and
arranging a conducting member (432) with the third flange (426) of the second connecting member (412), disposing the set of second bolts (430) in electrical contact with the conductor rod (118).

14. The method (700) as claimed in claim 12 further comprising:
providing the first connecting member (502) with external threads (532) defined along an outer side (534) of the hollow cylindrical section (504), proximal to the second end (504b) thereof;
providing the second connecting member (512) with internal threads (536), complementary to the external threads (532) in the first connecting member (502), defined along an inner side (538) of the hollow cylindrical section (514) thereof;
sliding the cable housing (116) along the second portion (118b) of the conductor rod (118);
sliding the second connecting member (512) along the second portion (118b) of the conductor rod (118), such that a first end (116a) of the cable housing (116) is disposed between the first connecting member (502) and the second connecting member (512); and
engaging the external threads (532) in the first connecting member (502) with the complementary internal threads (536) in the second connecting member (512) to mount the second connecting member (512) to the first connecting member (502), and thereby supporting the cable housing (116) onto the second connecting member (512).

15. The method (700) as claimed in claim 12 further comprising:
providing the first connecting member (602) having an annular insert (640) with external threads (642) embedded therein such that the external threads (642) of the annular insert (640) are exposed;
providing the second connecting member (612) in the form of an annular nut with internal threads (644) and having a thickness in the radial direction thereof to define a rim (646) therefor;
sliding the cable housing (116) along the second portion (118b) of the conductor rod (118);
sliding the second connecting member (612) along the second portion (118b) of the conductor rod (118), such that the first end (116a) of the cable housing (116) is disposed between the first connecting member (602) and the second connecting member (612); and
engaging the external threads (642) of the annular insert (640) in the first connecting member (602) with the complementary internal threads (644) in the second connecting member (612) to mount the second connecting member (612) to the first connecting member (602), and thereby supporting the cable housing (116) onto the rim (646) of the second connecting member (612).
